# EUROPÄISCHE PATENTANMELDUNG

(11) **EP 2 918 889 A1**
(43) Veröffentlichungstag der Anmeldung: **16.09.2015**
(21) Anmeldenummer: 15158502.3
(22) Anmeldetag: 10.03.2015
(51) Int. Cl.: F16L 59/14, F16L 59/15, F16L 59/153

(54) **Wärmeisoliertes Leitungsrohr mit gewelltem Mediumrohr**

(30) Priorität: 10.03.2014 AT 1722014; 08.04.2014 AT 1552014 U; 08.04.2014 DE 202014101637 U
(71) Anmelder: Isoplus Fernwärmetechnik Gesellschaft m.b.H., 3192 Hohenberg (AT)
(72) Erfinder: Rockenbauer, Raimund, 3192 Hohenberg (AT)
(74) Vertreter: Ellmeyer, Wolfgang

(57) **Zusammenfassung**

Leitungsrohr umfassend zumindest ein gewelltes Mediumrohr (1) mit einer Dicke si, wobei die Wellenform des Mantels durch den Außendurchmesser da und Innendurchmesser di, durch den Wellenabstand ai, resultierend aus dem Wellenabstand ai und den Durchmessern da und di durch die Wellentiefe ti sowie durch den Flankenwinkel FWi angebbar ist, eine das Mediumrohr umgebende Dämmschicht (2) mit einem Durchmesser Dd, ein Außenrohr (4) mit einem Durchmesser Da, wobei das Leitungsrohr eine Trägerfolie (3) umfasst, welche Trägerfolie (3) zwischen der Dämmschicht (2) und dem Außenrohr (4) angeordnet ist, in zumindest einem Teilbereich des Mediumrohres (1) die Wellung des Mediumrohres (1) ein Verhältnis Wellentiefe ti zu Wellenabstand ai in einem Bereich 0,2 bis 0,4 und/oder ein Verhältnis Wellentiefe ti zu Innendurchmesser di 0,03 bis 0,06 aufweist, wobei der Flankenwinkel FWi des Mediumrohres in einem Bereich zwischen 40° und 50° liegt.

## Beschreibung

Die im Folgenden offenbarte Erfindung betrifft ein Leitungsrohr umfassend zumindest ein gewelltes Mediumrohr mit einer Dicke si, eine das Mediumrohr umgebende Dämmschicht mit einem Durchmesser Dd und ein Außenrohr mit einem Durchmesser Da, wobei die Wellenform des Mantels der zumindest einen Welle des Mediumrohres durch den Außendurchmesser da und den Innendurchmesser di, durch den Wellenabstand ai, resultierend aus dem Wellenabstand ai und aus den Durchmessern da und di durch die Wellentiefe ti sowie durch den Flankenwinkel Fwi angebbar ist.

Die hier offenbarte Erfindung betrifft die Wellung des Mantels des Mediumrohres. Im Folgenden wird kurz von einer Wellung des Mediumrohres oder von einem gewellten Mediumrohr gesprochen.

Es wird im Rahmen dieser Erfindung unter dem Begriff Wellung eine Form eines Körpers, hier eines Rohres verstanden, welche Form an zumindest einer Oberfläche des Körpers sichtbar ist. Obige Wellenform schließt auch die mögliche Ausführung der Wellung ein, dass die Wellung an beiden, zu einander gegenüberliegenden Oberflächen des Körpers ausgeformt und somit sichtbar ist. Im Falle einer Wellung, welche an beiden Oberflächen des Körpers sichtbar ist, kann der Körper zwischen den beiden Oberflächen eine im Wesentlichen konstante Dicke aufweisen. Im Falle einer nur an einer Oberfläche des Körpers sichtbaren Wellung kann der Körper keine konstante, somit eine veränderliche Dicke zwischen den Oberflächen aufweisen.

Der Fachmann versteht unter einem gewellten Rohr ein Rohr, dessen Welle eine Wellenform mit Wellenachsen aufweist, welche Wellenachsen in einem Neigungswinkel von 90° (rundgewellte Rohr) oder in einem von 90° abweichenden Neigungswinkel (wendelgewelltes Rohr) zu der Längsachse des Rohres orientiert sind. Ein gewelltes Rohr mit einem Neigungswinkel von kleiner als 90° weist eine schraubenlinienförmige Wellung oder wendelgewellte Form auf. Das im Rahmen der Offenbarung dieser Erfindung diskutierte Rohr kann eine Welle mit einem Neigungswinkel zu der Längsachse oder auch mehrere Wellen mit unterschiedlichen Neigungswinkeln zu der Längsachse des Rohres umfassen. Nach gängiger Lehre bewirkt eine Wellung des Mediumrohres eine höhere Biegsamkeit des Mediumrohres, da die für eine Biegung des Leitungsrohres notwendige Verformung des Mediumrohres durch die Wellenform vorgegeben ist. Die Wellung des Rohres bewirkt die Definition von Sollbiegestellen in der Oberfläche des Rohres bei einer Biegung des Rohres. Im Allgemeinen weist ein gewelltes Rohr eine geringere Biegesteifigkeit auf als ein nicht gewelltes, glattes Rohr.

EP0892207 beschreibt ein Leitungsrohr umfassend ein gewelltes Mediumrohr und ein gitterartiges oder geflechtartiges Band, welches in der Dämmschicht eingebettet ist. Der Fachmann erkennt anhand des Merkmals der Einbettung, dass das gitterartige oder geflechtartige Band gemäß EP0892207 eine besondere statische Wirkung im offenbarten Leitungsrohr hat. Bei dem in EP0892207 offenbarten Leitungsrohr ist das gitterartige oder geflechtartige Band in der Dämmschicht eingebettet, da Polyisocyanurat - wie in EP0892207 vorgeschlagen - spröde Werkstoffeigenschaften aufweist. Das gitterartige oder geflechtartige Band wirkt somit als Bewehrungselement, um ein großflächiges Versagen der Dämmschicht in Form von Rissbildung beim Biegen des Leitungsrohres zu unterbinden.

Moderne Produktionstechniken zur Herstellung von wärmeisolierten Leitungsrohren sind beispielsweise aus EP0897788A1 bekannt. Es kommt hierbei eine Trägerfolie zum Einsatz, um - auch unter dem Einsatz von Formvorrichtungen - den Dämmstoff während des Herstellungsprozesses eines Leitungsrohres gemäß EP0897788A1 unter Begrenzung der räumlichen Ausdehnung des schäumenden Dämmstoffes zu führen. Die Trennfolie weist keine nennenswerten statischen Eigenschaften auf, wenngleich die Trennfolie mit der Dämmschicht und dem Außenrohr verbunden ist.

Nach dem Stand der Technik ist die Verwendung von Trägerfolie jedoch nicht auf die Herstellung von wärmeisolierten Leitungsrohren mit einer gewellten Oberfläche des Außenrohres beschränkt. Es ist auch Stand der Technik, unter Anwendung dieser Technik wärmeisolierte Leitungsrohre mit einer glatten Oberfläche herzustellen.

Nach dem Stand der Technik sind wärmeisolierte Leitungsrohre auch aus den Dokumenten US2006213567A1, EP0892207A2, US3561492A, US2005211326A1 bekannt. Diese Dokumente liefern jedoch alleine oder unter Zusammenschau dem Fachmann keinen ausreichenden Hinweis, ein Leitungsrohr mit den im Folgenden skizzierten Eigenschaften auszubilden.

Es liegt dieser Erfindung unter anderem die Aufgabenstellung zugrunde, die bekannten Produktionstechniken zur Herstellung eines wärmeisolierten Leitungsrohres auch für die Herstellung eines wärmeisolierten Leitungsrohres umfassend ein gewelltes Mediumrohr einzusetzen. Der Fachmann erkennt, dass im Vergleich zu EP0897788A1 durch den Ersatz des statischen Elementes des gitterartigen oder geflechtartigen Bandes durch das Trägerband eine Neudimensionierung des Leitungsrohres notwendig ist.

Die Erfinder stellen sich hierbei weiters die Aufgabe ein hohes Maß an Flexibilität bei einem gleichzeitigen geringen Druckverlust des im Mediumrohr fließenden Fluids zu gewährleisten.

Erfindungsgemäß werden die oben erwähnten Aufgabenstellungen dadurch erreicht, dass das Leitungsrohr eine Trägerfolie umfasst, welche Trägerfolie zwischen der Dämmschicht und dem Außenrohr angeordnet ist, wobei in zumindest einem Teilbereich des Mediumrohres das Verhältnis Wellentiefe ti zu Wellenabstand ai in einem Bereich 0,2 bis 0,4, das Verhältnis Wellentiefe ti zu Innendurchmesser di 0,3 bis 0,6, wobei der Flankenwinkel FWi in einem Bereich zwischen 40° und 50° liegt.

Ein so hergestelltes wärmeisoliertes Leitungsrohr ist im Vergleich zum Stand der Technik als sehr flexibel anzusehen. Bei einem Leitungsrohr DN25 ist das Mediumrohr um einen Biegeradius von 270mm biegbar. Weiters ist ein Leitungsrohr DN32 um einen Biegeradius von 390mm, ein Leitungsrohr DN um einen Biegeradius von 520mm und eine Leitungsrohr DN50 um einen Biegeradius von 650mm biegbar.

Die Wahl der im Anspruch 1 angegebenen Verhältnisse bewirkt, dass bei Biegung eines jeweiligen Leitungsrohres um den oben genannten minimalen Biegeradius die vom Biegezentrum aus gesehene äußere Innenoberfläche des Mediumrohres annähernd eine glatte Oberfläche erhält. Dies steht im Zusammenhang mit der geometrisch notwendigen Dehnung oder Streckung des vom Biegezentrum aus gesehenen äußeren Bereich des Rohres.

Die Wellenform wird jedoch keinesfalls durch die Streckung des Mediumrohres zur Gänze, sondern nur annähernd geglättet. Die annähernde Glättung der Wellung ist eine Glättung, welche nur einem solchen Ausmaß erfolgt, sodass leichte Wellen mit einer geringen Höhe überbleiben, sodass eine Rückverformung des gebogenen Mediumrohres möglich ist.

Die Trägerfolie wird unter anderem aus den eingangs erwähnten produktionstechnischen Gründen benötigt. Die Trägerfolie dient nach dem Stand der Technik der räumlichen Begrenzung der räumlichen Ausdehnung des schäumenden Dämmstoffes, wobei die Form der Trägerfolie durch geeignete Formvorrichtungen vorgegeben wird.

Ein Leitungsrohr wird nach dem Stand der Technik aus unterschiedlichen Materialien hergestellt, welche bei einer Temperaturänderung unterschiedliche Längenänderungen zufolge der Wärmedehnung aufweisen. Das Mediumrohr kann beispielsweise aus Kunststoff, Metall oder Edelstahl hergestellt sein. Bei einer Herstellung aus einem Metall kann die erwähnte Längenänderung im Vergleich zu der Längenänderung des Dämmstoffes besonders schwerwiegend auftreten.

Es ist prinzipiell festzustellen, dass ein hohes Verhältnis von Wellentiefe ti zu Wellenabstand ai sich günstig auf das beschriebene Problem der Längenänderung auswirkt, da der Großteil der Längenänderung des Mediumrohres in einem Winkel zu der Längsachse des Mediumrohres stattfindet.

Ebenso wirkt sich ein hohes Verhältnis von Wellentiefe ti zu Wellenabstand ai positiv auf die Flexibilität des Mediumrohres und somit positiv auf die Flexibilität des erfindungsgemäßen Leitungsrohres aus. Das Verhältnis von Wellentiefe ti zu Wellenabstand ai kann 0,2, 0,3 und 0,4 betragen.

Ein größeres Verhältnis ti zu ai hat jedoch auf den negativen Effekt, dass das Mediumrohr bei Innendruckbelastung gestreckt wird, wodurch die Beaufschlagung des Mediumrohres mit einem Innendruck begrenzt ist.

Ein hohes Verhältnis von Wellentiefe ti zu Wellenabstand ai wirkt sich jedoch negativ auf den auftretenden Druckverlust aus, da das im Mediumrohr strömende Fluid durch die Wellenform des Mediumrohres stark gebremst wird. Der im Mediumrohr herrschende Druck ist nach den Gesetzen der Physik (Strömung nach Bernoulli und Venturini) eine Funktion der Fließgeschwindigkeit des strömenden Fluids.

Eine Wellung des Mantels des Mediumrohres hat einen Einfluss auf den Querschnitt der Kernströmung. Hieraus erkennt der Fachmann, dass die Form der Welle auch in Bezug auf den Durchmesser des Mediumrohres abzustimmen ist.

Das Verhältnis Wellentiefe ti zu Innendurchmesser di wirkt sich gleichermaßen positiv auf die Längenänderung und die Flexibilität des Leitungsrohres wie das Verhältnis von Wellentiefe ti zu Wellenabstand ai aus. Ebenso ist eine negative Wirkung auf die Fließgeschwindigkeit und den Druckverlauf eines im Mediumrohr strömenden Fluids zu beobachten. Das Verhältnis Wellentiefe ti zu Innendurchmesser di kann 0,3, 0,4, 0,5 und 0,6 betragen.

Insgesamt stellen die oben angegebenen Bereiche mitsamt dem angegebenen Flankenwinkel ein Optimum der zu lösenden Aufgabe dar. Ein hoher Flankenwinkel bewirkt eine höhere Flexibilität des Mediumrohres und somit des erfindungsgemäßen Leitungsrohres.

Die Wellung des erfindungsgemäßen Leitungsrohres kann einen symmetrischen Flankenwinkel Fwi aufweisen, d.h. der Flankenwinkel der aufsteigenden Welle und der Flankenwinkel der absteigenden Welle sind gleich. Dies hat den Vorteil, dass das erfindungsgemäße Leitungsrohr keine in eine Richtung ausgeprägten Biegeeigenschaften aufweist.

Die Wahl der angegebenen Bereiche ist auch durch das Bestreben des Unterbindens von Turbulenzen, welche in dem im Mediumrohr strömenden Fluid auftreten können, geprägt. Insgesamt hat ein gewelltes Mediumrohr im Vergleich zu einem glatten Mediumrohr den Nachteil des Auftretens von erhöhten Turbulenzen im strömenden Fluid.

Die Dämmschicht füllt den sich zwischen Mediumrohr und Außenrohr ergebenden Ringspalt aus. Die Wellung des Mediumrohres ist so zu wählen, dass ein Ausfüllen der Wellentäler durch den Dämmstoff produktionstechnisch mit einem vertretbaren Aufwand möglich ist.

Die Dämmschicht kann aus verschiedenen Polyurethan-Hartschäumen hergestellt sein. Das Verhältnis von Wellenabstand ai zu Wellenradius ri kann circa 4,0 betragen.

Das Verhältnis von Wellentiefe zu Wellenradius ri kann circa 1,1 bis 1,5 betragen.

Die Wellung des Mediumrohres kann ein Verhältnis von Wellentiefe ti zu Wellenradius ri mit 1,1, 1,2, 1,3, 1,4 und 1,5 aufweisen. Aus produktionstechnischen Gründen wird die Wellung des Mediumrohres zumeist so ausgeführt, dass der Radius des Wellenberges und der Radius des Wellentales gleich sind.

Die Wellung des Mediumrohres kann aber auch im Wellental einen anderen Wellenradius als im Wellental aufweisen.

Messungen zeigten, dass das Verhältnis von Wellenabstand a zu Wellenradius t und das Verhältnis von Wellentiefe zu Wellenradius sich insbesondere vorteilhaft auf die zu lösende Aufgabe auswirken.

Der Wellenabstand ai ist im Rahmen dieser Erfindung der zwischen zwei Wellentälern oder zwischen zwei Wellenbergen gemessene Abstand.

Der Hauptanspruch enthält die Bestimmung, dass das Mediumrohr zumindest in einem Teilbereich die angeführten geometrischen Verhältnisse erfüllt. Der Fachmann kann unter Heranziehen seines Fachwissens diese Teilbereiche über die Länge des Mediumrohres verteilt vorsehen. Beispielsweise können diese Teilbereiche in regelmäßigen oder unregelmäßigen Abständen vorgesehen werden, sodass das erfindungsgemäße Leitungsrohr in diesen regelmäßigen oder unregelmäßigen Abständen die oben angeführten besonderen Eigenschaften in Hinblick auf die Flexibilität des Leitungsrohres erfüllt.

Das erfindungsgemäße Leitungsrohr kann über seine gesamte Erstreckungslänge die oben beschriebenen Teilbereiche aufweisen, wobei ein Teilbereich an den vorhergegangenen Teilbereich abstandslos anschließt.

Die Wellung kann im Bereich des Wellentals und/oder im Bereich des Wellenberges eine polygonale Form aufweisen. Die polygonale Form des Wellentals oder des Wellenberges kann eine kreisrunde, elliptisch runde Form aufweisen. Ebenso ist eine Form denkbar, welche an die Form einer sin-, sinh-, cos-, cosh-Funktion oder einer sonstiger dem Fachmann unter Anwendung seines allgemeinen Fachwissens bekannten Funktion aufweisen. Selbstverständlich sind Mischformen der erwähnten und denkbaren Funktionen denkbar.

Die Wellung im Bereich des Wellentals und/oder im Bereich des Wellenberges kann auch eine spitz zulaufende Kante aufweisen. Der Fachmann wählt den Winkel der spitz zulaufenden Kante mit Hilfe seines Fachwissens.

Eine spitz zulaufende Kante hat den Vorteil, dass bei Biegung des Mediumrohres durch den Momentenkraftverlauf im Bereich der Kante die spitz zulaufende Kante als ein Gelenk wirkt.

Ein gewelltes Mediumrohr wird durch Prägen der Oberfläche hergestellt. Dies geschieht im Wesentlichen durch ein um die Längsachse des Mediumrohres rotierendes Prägewerkszeug oder durch eine kontinuierlich arbeitende Prägevorrichtung, bei welcher das Mediumrohr parallel zu dessen Längsachse durch dieses getrieben wird. Es sind dem Fachmann hinsichtlich der Produktionstechniken nahezu keine Einschränkungen in Bezug auf die Form der Wellung gegeben.

Der Fachmann hat allerdings die Form der Wellung des Mediumrohrs hinsichtlich der strömungstechnischen Eigenschaften zu wählen, da Turbulenzen im durch das Mediumrohr strömende Fluid vermieden werden sollen. Aus diesem Grund sind polygonale Formen der Wellung gegenüber spitz zulaufenden Kanten zu bevorzugen.

Eine mögliche Ausführungsform des erfindungsgemäßen Leitungsrohres ist, dass zumindest eine der beiden Endbereiche des Mediumrohres als Teilbereich des Mediumrohres die gewellte Form aufweist.

Nach dem Stand der Technik umfasst das Leitungsrohr in seinem Endbereich keine das Mediumrohr ummantelnde Dämmschicht und folglich kein Außenrohr. Das Leitungsrohr besteht im Endbereich ausschließlich aus dem Mediumrohr. Es ist einerseits möglich, dass schon während der Produktion keine Dämmschicht und kein Außenrohr im Endbereich vorgesehen werden. Andererseits ist es möglich, dass vor dem Verlegen des Leitungsrohres die Dämmschicht und das Außenrohr entfernt werden.

Die oben beschriebene Ausführung des Endbereiches ist notwendig, um ein Leitungsrohr mit einem weiteren Leitungsrohr verbinden zu können oder an anderen bekannten Vorrichtungen anschließen zu können. Oftmals werden die Leitungsrohre nur ungenau verlegt, sodass der Monteur den Endbereich des Leitungsrohres im Zuge der Herstellung eines Anschlusses ausrichten und somit biegen muss.

Die hier offenbarte Erfindung stellt sich auch die Aufgabe, das Ausrichten des Leitungsrohres in dessen Endbereich zu erleichtern. Die hier aufgezeigte Lösung ist beim Verlegen beziehungsweise bei Herstellung eines Anschlusses von Bedeutung, als dass die Baugrube eng ist und somit die Arbeit des Monteurs schwer ist.

Vorzugsweise wird die Wellung im Endbereich mittels des rotierenden Prägewerkzeuges hergestellt.

Die Wellung des Mediumrohres im Endbereich hat die Wirkung, dass der Monteur ohne erheblichen Kraftaufwand den Endbereich des Leitungsrohres ausrichten kann. Anschließend stellt der Monteur nach Verfahren nach dem Stand der Technik wie Verschweißen oder mittels Vorrichtungen nach dem Stand der Technik wie Muffen und dergleichen den Anschluss oder die Verbindung her.

Das Leitungsrohr kann eine Gaspermationsschicht umfassen, welche einstückig mit der Trägerfolie und/oder mit dem Außenrohr ausgebildet ist. Das Außenrohr oder die Oberflächen des Außenrohres können glatt oder gewellt sein. Ein gewelltes Außenrohr oder gewellte Oberflächen eines Außenrohres können rundgewellt (Wellenachse in einem Winkel von 90° zu der Längsachse des Leitungsrohres orientiert) oder wendelgewellt (Wellenachse in einem von 90° abweichenden Winkel zu der Längsachse des Leitungsrohres orientiert) sein.

Das erfindungsgemäße Leitungsrohr zeichnet sich eine hohe Flexibilität aus. Das Biegen des Leitungsrohres kann jedoch ein Reißen der Wärmedämmschicht hervorrufen, wobei eine Rissbildung gemäß Normung zulässig ist. Ein Riss stellt jedenfalls eine zusätzliche Oberfläche dar, über welche Feuchtigkeit in die Dämmschicht eintreten kann. Um dies zu unterbinden, wird erfindungsgemäß eine Trennfolie zwischen Dämmschicht und Außenrohr angeordnet, welche Trennfolie auch als Gaspermationsschicht wirkt.

Das Außenrohr des erfindungsgemäßen Leitungsrohres kann eine glatte oder gewellte Oberfläche aufweisen.

Das Außenrohr, insbesondere die Wellung des Außenrohres kann nach Verfahren nach dem Stand der Technik hergestellt werden. Das Außenrohr kann aus Kunststoff oder Metall hergestellt sein.

Die Wellung des Außenrohres kann im Bereich des Wellentals und/oder im Bereich des Wellenberges eine polygonale Form aufweisen.

Die polygonale Form des Wellentals oder des Wellenberges kann eine kreisrunde, elliptisch runde Form aufweisen. Ebenso ist eine Form denkbar, welche an die Form einer sin-, sinh-, cos-, cosh-Funktion oder einer sonstiger dem Fachmann unter Anwendung seines allgemeinen Fachwissens bekannten Funktion aufweisen. Selbstverständlich sind Mischformen der erwähnten und denkbaren Funktionen denkbar.

Die Wellung des Außenrohres im Bereich des Wellentals und/oder im Bereich des Wellenberges kann auch eine spitz zulaufende Kante aufweisen. Der Fachmann wählt den Winkel der spitz zulaufenden Kante mit Hilfe seines Fachwissens.

Eine spitz zulaufende Kante hat den Vorteil, dass bei Biegung des Mediumrohres durch den Momentenkraftverlauf im Bereich der Kante die spitz zulaufende Kante als ein Gelenkt wirkt.

Ein gewelltes Außenrohr wird durch Prägen der Oberfläche hergestellt. Dies geschieht im Wesentlichen durch ein um die Längsachse des Mediumrohres rotierendes Prägewerkszeug oder durch eine kontinuierlich arbeitende Prägevorrichtung, bei welcher das Mediumrohr parallel zu dessen Längsachse durch dieses getrieben wird. Es sind dem Fachmann hinsichtlich der Produktionstechniken nahezu keine Einschränkungen in Bezug auf die Form der Wellung gegeben.

Der Fachmann wählt die Form der Wellung des Außenrohres in Hinblick auf die Flexibilität des Rohres. Der Fachmann wählt die Form der Wellung des Außenrohres und die Wellung des Mediumrohres so, dass die Wellungen in Hinblick auf die mechanischen Eigenschaften, insbesondere die Biegung des Leitungsrohres zusammenarbeiten. Vorzugsweise ist ein Wellental oder Wellenberg der Wellung des Außenrohres und ein Wellental oder Wellenberg der Wellung des Mediumrohres - im Längsschnittbild gesehen - übereinander liegend angeordnet.

Die Wellung des Außenrohres kann ein Verhältnis Wellentiefe Ta zu Wellenabstand Aa in einem Bereich von 0,08 bis 0,35 aufweisen.

Die Wellung des Außenrohres kann ein Verhältnis Wellentiefe ta zu Durchmesser des Außenrohres Da 0,02 bis 0,15 aufweisen.

Die Wellung des Außenrohres kann einen Flankenwinkel FWa in einem Bereich zwischen 40° und 50° aufweisen.

Die Wellung des Außenrohres kann ein Verhältnis von Wellenabstand Aa zu Wellenradius Ra circa 4,0 aufweisen.

Die Wellung des Außenrohres kann ein Verhältnis von Wellentiefe Ta zu Wellenradius Ra 1,1 bis 1,5 aufweisen.

Das Außenrohr kann aus einem Kunststoff sein.

Zusammenfassend werden in dieser Offenbarung die folgenden Abkürzungen für die nachstehenden Maßangaben verwendet.
- si: Dicke Mediumrohr
- di: Durchmesser innen Mediumrohr
- da: Durchmesser außen Mediumrohr
- ti: Tiefe Welle Mediumrohr
- FWi: Flankenwinkeln Mediumrohr
- Dd: Durchmesser außen Dämmstoff
- Sa: Dicke Außenrohr
- Di: Durchmesser innen Außenrohr
- Da: Durchmesser außen Außenrohr
- ta: Tiefe Welle Außenrohr
- FWa: Flankenwinkel Außenrohr

Figur 1 zeigt einen Längsschnitt einer Ausführungsform des erfindungsgemäßen Leitungsrohres, in welchem die in den Ansprüchen 1 bis 3 angegebenen geometrischen Angaben eingetragen sind.

Figur 2 zeigt ein Diagramm betreffend den Druckverlust von Mediumrohren mit unterschiedlichen Durchmessern.

Figur 3 zeigt einen Längsschnitt einer weiteren Ausführungsform des erfindungsgemäßen Leitungsrohres.

In den Figuren kennzeichnen die folgenden Bezugszeichen die nachstehenden Elemente des Leitungsrohres. Die Figuren veranschaulichen lediglich eine beispielhafte Ausführungsform des erfindungsgemäßen Leitungsrohres.
- 1: Mediumrohr
- 2: Dämmschicht
- 3: Trägerfolie
- 4: Außenrohr
- 5: Endbereich (des Mediumrohres)

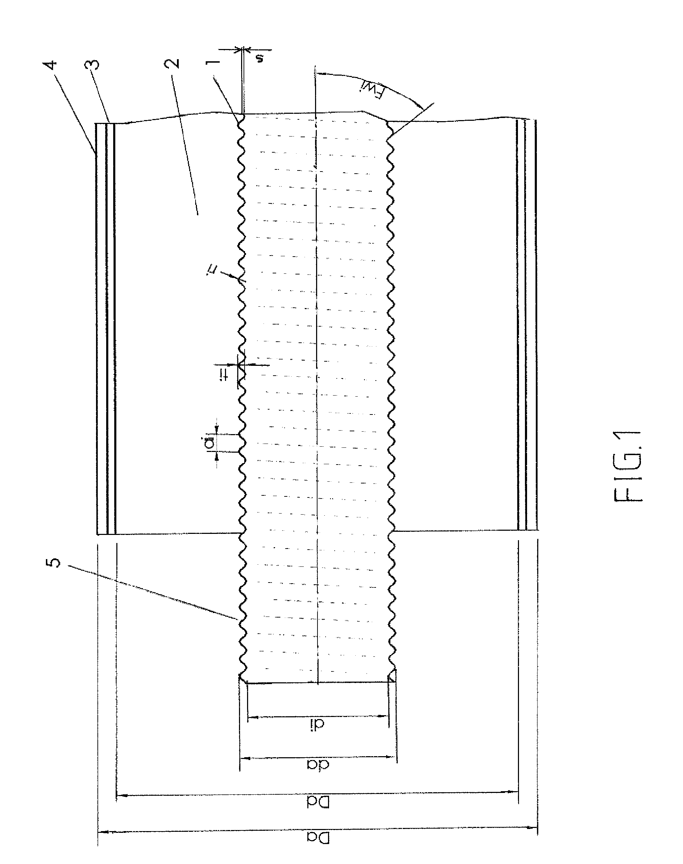

Figur 1 zeigt einen Längsschnitt einer möglichen Ausführungsform eines erfindungsgemäßen Leitungsrohres. Dieses umfasst ein gewelltes Mediumrohr 1 mit einer Dicke si. Die Wellenform des Mantels kann durch den Außendurchmesser da und Innendurchmesser di, durch den Wellenabstand ai, durch die Wellentiefe ti, welche aus dem Wellenabstand ai und den Durchmessern da und di resultiert, sowie durch den Flankenwinkel Fwi angegeben werden.

Die das Mediumrohr umgebende Dämmschicht 2 weist einem Durchmesser Dd auf. Das Außenrohr 4 weist einen Durchmesser Da auf. Das Leitungsrohr umfasst weiters eine Trägerfolie 3.

Die Geometrie der Wellenform des Mediumrohres erfüllt die folgenden Verhältnisse:
- Wellentiefe ti zu Wellenabstand ai in einem Bereich 0,2 bis 0,4
- Wellentiefe ti zu Innendurchmesser di 0,03 bis 0,06.

Der Flankenwinkel FWi liegt in einem Bereich zwischen 40° und 50°.

Das Außenrohr 4 ist bei der in Figur 1 gezeigten Ausführungsform glatt.

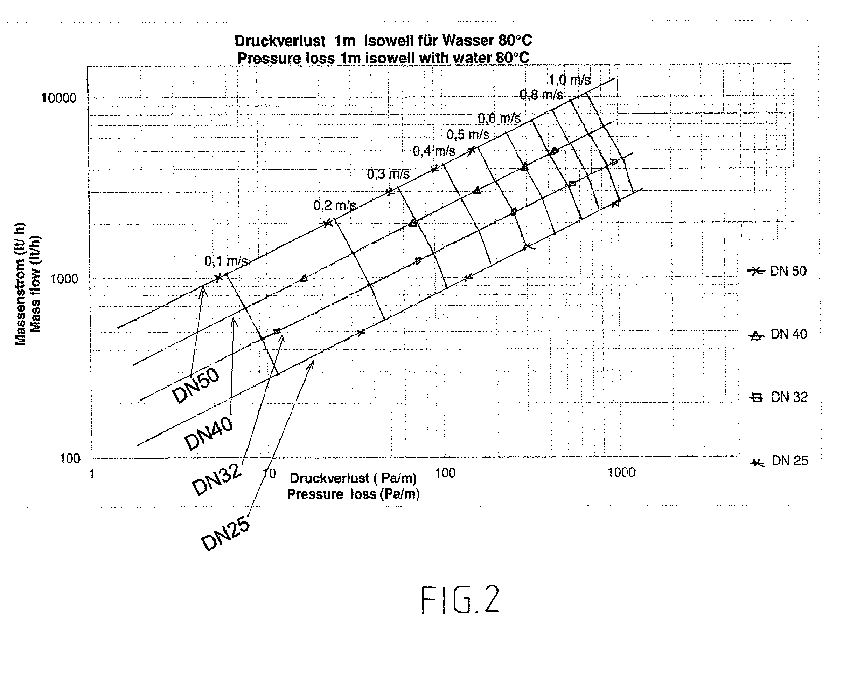

Figur 2 zeigt ein Diagramm über einen Druckverlust, welcher bei erfindungsgemäßen Leitungsrohren gemessen wurde. Es ist hierbei die Graphen betreffend unterschiedliche Durchmesser des Mediumrohres angegeben (DN25 bis DN50). Es ist auf der x-Achse der gemessene Druckverlust, auf der y-Achse der Durchfluss aufgetragen. Das Diagramm von Figur 2 dient der ingenieurmäßigen Auslegung von erfindungsgemäßen Leitungsrohren. Die im Diagramm diskutierten Rohrleitungen weisen die folgenden Dimensionen auf:

| **DN** | da | di | si | ai | ri | FWi |
|---|---|---|---|---|---|---|
| **25** | 35,2 | 32 | 0,3 | 4,5 | 1,15 | 40,8 |
| **32** | 44,8 | 40 | 0,4 | 6,0 | 1,5 | 46,9 |
| **40** | 54,8 | 49 | 0,5 | 7,0 | 1,7 | 47,9 |
| **50** | 66,6 | 61 | 0,5 | 8,0 | 2,0 | 40,2 |

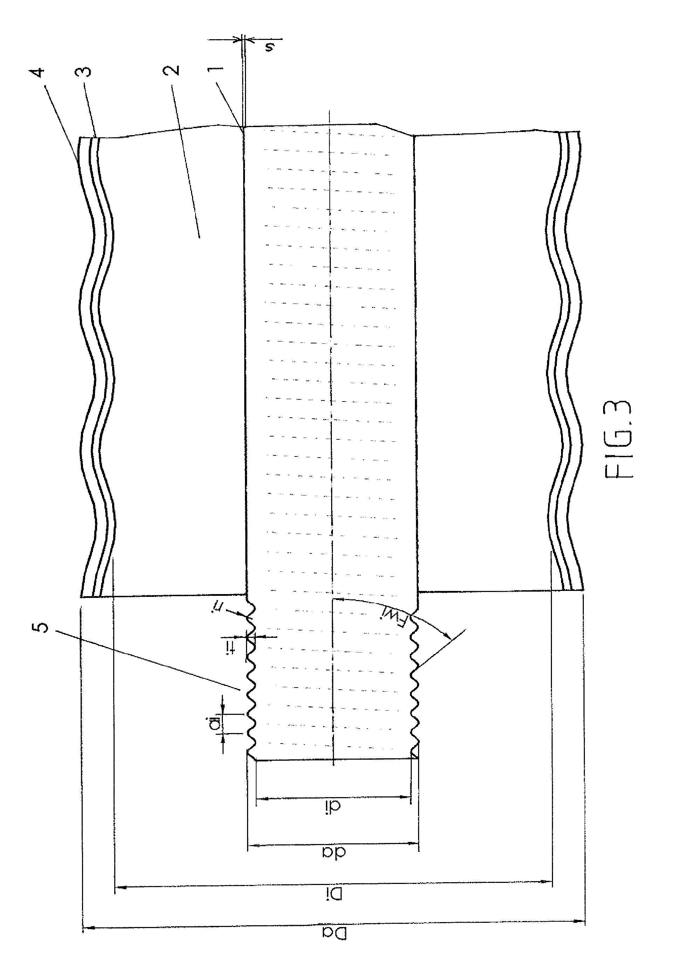

Figur 3 zeigt einen Längsschnitt einer weiteren Ausführungsform eines erfindungsgemäßen Leitungsrohres. Das Leitungsrohr umfasst im Wesentlichen ein Mediumrohr 1, eine Dämmschicht 2, eine Trägerfolie 3 und ein Außenrohr 4.

Im Endbereich 5 des Mediumrohres 1 ist das Mediumrohr 1 beim Verlegen nicht durch eine Dämmschicht 2 umhüllt. Es wird hierzu der Endbereich der Dämmschicht 2 und des Außenrohres 4 abgezogen oder bei der Herstellung ausgespart. Der Endbereich 5 ist für die Herstellung eines Verbundes mit einem weiteren Leitungsrohr oder einer Anschlussvorrichtung vorbereitet. Das Leitungsrohr umfasst demzufolge im Endbereich 5 keine Trägerfolie 3 und kein Außenrohr 4.

Nach Herstellung einer Verbindung mit einem weitern Mediumrohr wird der Endbereich 5 mit einer Dämmschicht verfüllt. Es kann weiters eine dem Außenrohr ähnliche Oberflächenschicht vorgesehen werden.

Das Mediumrohr 1 weist ausschließlich im nicht umhüllten, somit frei liegenden Endbereich 5 eine Wellung auf. Jener Teil des Mediumrohres 1, welcher durch die Dämmschicht 2 umhüllt ist, weist keine Wellung auf.

Das Außenrohr 4 weist bei der in Figur 3 dargestellten Ausführungsform eine Wellung auf.

## Patentansprüche

1. Leitungsrohr umfassend
zumindest ein gewelltes Mediumrohr (1) mit einer Dicke si, wobei die Wellenform des Mantels durch den Außendurchmesser da und Innendurchmesser di, durch den Wellenabstand ai, resultierend aus dem Wellenabstand ai und den Durchmessern da und di durch die Wellentiefe ti sowie durch den Flankenwinkel FWi angebbar ist, eine das Mediumrohr umgebende Dämmschicht (2) mit einem Durchmesser Dd, ein Außenrohr (4) mit einem Durchmesser Da,
**dadurch gekennzeichnet, dass**
das Leitungsrohr eine Trägerfolie (3) umfasst, welche Trägerfolie (3) zwischen der Dämmschicht (2) und dem Außenrohr (4) angeordnet ist,
in zumindest einem Teilbereich des Mediumrohres (1) die Wellung des Mediumrohres (1) ein Verhältnis Wellentiefe ti zu Wellenabstand ai in einem Bereich 0,2 bis 0,4 und/oder
ein Verhältnis Wellentiefe ti zu Innendurchmesser di 0,03 bis 0,06 aufweist, wobei der Flankenwinkel FWi des Mediumrohres in einem Bereich zwischen 40° und 50° liegt.

2. Leitungsrohr nach Anspruch 1, **dadurch gekennzeichnet, dass** die Wellung des Mediumrohres (1) im Bereich des Wellentals und/oder im Bereich des Wellenberges eine polygonale Form aufweist.

3. Leitungsrohr nach einem der Ansprüche 1-2, **dadurch gekennzeichnet, dass** die Wellung des Mediumrohres (1) im Bereich des Wellentals und/oder im Bereich des Wellenberges eine spitz zulaufende Kante aufweist.

4. Leitungsrohr nach einem der Ansprüche 1-2, **dadurch gekennzeichnet, dass** die Wellung des Mediumrohres (1) ein Verhältnis von Wellenabstand ai zu Wellenradius circa 4,0 aufweist.

5. Leitungsrohr nach einem der Ansprüche 1 bis 4, **dadurch gekennzeichnet, dass** die Wellung des Mediumrohres (1) ein Verhältnis von Wellentiefe ti zu Wellenradius ri 1,1 bis 1,5 aufweist.

6. Leitungsrohr nach einem der Ansprüche 1 bis 5, **dadurch gekennzeichnet, dass** zumindest einer der Endbereiche (5) des Mediumrohres (1) als Teilbereich des Mediumrohres (1) eine gewellte Form aufweist.

7. Leitungsrohr nach einem der Ansprüche 1 bis 6, **dadurch gekennzeichnet, dass** das Mediumrohr (1) aus einem Kunststoff oder einer Metalllegierung hergestellt ist.

8. Leitungsrohr nach einem der Ansprüche 1 bis 7, **dadurch gekennzeichnet, dass** das Leitungsrohr eine Gaspermationsschicht umfasst, welche einstückig mit der Trägerfolie (3) und/oder mit dem Außenrohr (4) ausgebildet ist.

9. Leitungsrohr nach einem der Ansprüche 1 bis 8, **dadurch gekennzeichnet, dass** das Außenrohr (4) eine glatte oder gewellte Oberfläche aufweist.

10. Leitungsrohr nach Anspruch 9, **dadurch gekennzeichnet, dass** die Wellung des Außenrohres (4) im Bereich des Wellentals und/oder im Bereich des Wellenberges eine polygonale Form aufweist.

11. Leitungsrohr nach einem der Ansprüche 9-10, **dadurch gekennzeichnet, dass** die Wellung des Außenrohres (4) im Bereich des Wellentales und/oder im Bereich des Wellenberges ein spitz zulaufende Kante aufweist.

12. Leitungsrohr nach einem der Ansprüche 9-11, **dadurch gekennzeichnet, dass** die Wellung des Außenrohres (4) ein Verhältnis Wellentiefe Ta zu Wellenabstand Aa in einem Bereich 0,08 bis 0,35 aufweist.

13. Leitungsrohr nach einem der Ansprüche 9-12, **dadurch gekennzeichnet, dass** die Wellung des Außenrohres (4) ein Verhältnis Wellentiefe Ta zu Durchmesser des Außenrohres Da 0,04 bis 0,15 aufweist.

14. Leitungsrohr nach einem der Ansprüche 9-13, **dadurch gekennzeichnet, dass** die Wellung des Außenrohres (4) einen Flankenwinkel FWa in einem Bereich zwischen 40° und 50° aufweist.

15. Leitungsrohr nach einem der Ansprüche 9-10 und 11-14, **dadurch gekennzeichnet, dass**
die Wellung des Außenrohres (4) ein Verhältnis von Wellenabstand Aa zu Wellenradius Ra circa 4,0 aufweist.

16. Leitungsrohr nach einem der Ansprüche 9-15, **dadurch gekennzeichnet, dass** die Wellung des Außenrohres (4) ein Verhältnis von Wellentiefe Ta zu Wellenradius Ra 1,1 bis 1,5 aufweist.

17. Leitungsrohr nach einem der Ansprüche 1-16, **dadurch gekennzeichnet, dass** das Außenrohr (4) aus einem Kunststoff oder einer Metalllegierung hergestellt ist.
